# EUROPÄISCHE PATENTSCHRIFT

(11) **EP 2 965 421 B1**
(45) Veröffentlichungstag und Bekanntmachung des Hinweises auf die Patenterteilung: **28.12.2016**
(21) Anmeldenummer: 14730782.1
(22) Anmeldetag: 28.05.2014
(51) Int. Cl.: H02P 29/02, H02P 6/12

(54) **ERKENNUNG EINES DRAHTBRUCHFEHLERS BEIM BETRIEB EINES BÜRSTENLOSEN GLEICHSTROMMOTORS**
DETECTION OF A WIRE BREAKAGE FOR OPERATING A BRUSHLESS DIRECT CURRENT MOTOR
DÉTECTION DE LA RUPTURE DU FIL POUR FAIRE FONCTIONNER UN MOTEUR À COURANT CONTINU SANS BALAIS

(30) Priorität: 21.06.2013 EP 13173182; 16.10.2013 DE 102013220995
(43) Veröffentlichungstag der Anmeldung: 13.01.2016
(73) Patentinhaber: Conti Temic Microelectronic GmbH, 90411 Nürnberg (DE); Continental Automotive GmbH, 30165 Hannover (DE)
(72) Erfinder: LOERINCZ, Robert Istvan, R-300414 Timisoara (RO); SCHNELL, Andreas, 91126 Kammerstein (DE)
(86) Internationale Anmeldenummer: PCT/EP2014/061177
(87) Internationale Veröffentlichungsnummer: WO 2014/202370

(56) Entgegenhaltungen:
- EP-A2- 0 945 970
- WO-A1-2009/063274
- WO-A1-2011/023137
- DE-A1-102012 205 471
- JP-A- 2010 088 183

## Beschreibung

Die Erfindung betrifft ein Verfahren zum Erkennen eines Drahtbruchfehlers beim Betrieb eines bürstenlosen Gleichstrommotors, der eine dreiphasige Statorwicklung aufweist und mit einer Pulsweitenmodulation gesteuert wird. Ferner betrifft die Erfindung eine Vorrichtung zur Durchführung des Verfahrens.

In Anwendungen leistungsstarker bürstenloser Gleichstrommotoren ist es äußerst wichtig, dass die Steuerungssysteme der Motoren Drahtbruchfehler der Motoren, beispielsweise offene Verbindungen zwischen den Phasenwicklungen oder in der Motorzuleitung, erkennen können.

Aus dem Stand der Technik sind beispielsweise Verfahren bekannt, bei denen Drahtbruchfehler bei abgeschalteten Motoren erkannt werden können. Dabei werden ein Phasenanschluss des Motors mit einer Stromquelle und die anderen Phasenanschlüsse mit Pull-Down-Widerständen verbunden und es werden Spannungen an allen Phasenanschlüssen gemessen. Im fehlerfreien Zustand des Motors sind die Spannungen an allen Phasenanschlüssen gleich, während ein Drahtbruchfehler unterschiedliche Spannungen bewirkt und dadurch erkannt werden kann. Derartige Verfahren können jedoch nicht im laufenden Betrieb des Motors durchgeführt werden.

Alternative Verfahren nutzen aus, dass ein Drahtbruchfehler den Gesamtstromverbrauch eines Motors herabsetzt und daher dadurch erkannt werden kann, dass ein gemessener Stromverbrauch des Motors deutlich kleiner als ein erwarteter Stromverbrauch ist. Solche Verfahren sind jedoch für Motoren ungeeignet, die über einen weiten Lastbereich operieren, da ein Betrieb bei kleiner Last einen Drahtbruchfehler vortäuschen kann. Außerdem bedingen diese Verfahren eine relativ lange Nachweiszeit zum Erkennen eines Drahtbruchfehlers und sind daher nicht für sicherheitsrelevante Anwendungen geeignet, die eine schnelle Reaktion auf Drahtbruchfehler erfordern.

Ferner kann ausgenutzt werden, dass bei einer Ansteuerung der Motorphasen mittels Halbbrücken mit jeweils zwei MOSFETs (MOSFET = Metall-Oxid-Halbleiter-Feldeffekttransistor) aufgrund eines Freilaufstroms, der zu Zeiten, wenn beide MOSFETs einer Halbbrücke gleichzeitig abgeschaltet sind, durch eine Bodydiode eines der MOSFETs fließt, eine Motorphasenspannung entweder um eine Diodenvorwärtsspannung unter ein Erdungsniveau fällt oder eine Versorgungsspannung um die Diodenvorwärtsspannung übersteigt. Ein Drahtbruchfehler verhindert das Fließen eines Freilaufstroms und kann daher prinzipiell dadurch erkannt werden, dass die Motorphasenspannung nie unter das Erdungsniveau fällt und nie die Versorgungsspannung übersteigt. Dieses Verfahren erfordert jedoch wegen der kleinen Messsignale eine hohe Messgenauigkeit und ist überdies wegen der Temperaturabhängigkeit der Diodenvorwärtsspannung stark temperaturabhängig.

Der Erfindung liegt die Aufgabe zu Grunde, ein verbessertes Verfahren zum Erkennen eines Drahtbruchfehlers beim Betrieb eines bürstenlosen Gleichstrommotors anzugeben. Ferner liegt der Erfindung die Aufgabe zu Grunde, eine Vorrichtung zur Durchführung des Verfahrens anzugeben.

Die Aufgabe wird erfindungsgemäß hinsichtlich des Verfahrens durch die Merkmale des Anspruchs 1 und hinsichtlich der Vorrichtung durch die Merkmale des Anspruchs 8 gelöst.

Vorteilhafte Ausgestaltungen der Erfindung sind Gegenstand der Unteransprüche.

Bei dem erfindungsgemäßen Verfahren zum Erkennen eines Drahtbruchfehlers beim Betrieb eines bürstenlosen Gleichstrommotors, der eine dreiphasige Statorwicklung aufweist und mit einer PWM (= Pulsweitenmodulation) gesteuert wird, werden für wenigstens eine Statorwicklungsphase der Statorwicklung während jeder PWM-Taktperiode eine Einschaltverzögerungsdauer eines Übergangs eines an der Statorwicklungsphase anliegenden elektrischen Phasenpotentials von einem Abschaltpotential zu einem Einschaltpotential und eine Abschaltverzögerungsdauer des Übergangs dieses Phasenpotentials von dem Einschaltpotential zu dem Abschaltpotential erfasst. Ferner wird eine Abweichungsuntergrenze für ein Abweichen erfasster Abschaltverzögerungsdauern von erfassten Einschaltverzögerungsdauern definiert und auf einen Drahtbruchfehler geschlossen, wenn die Abweichungen der erfassten Abschaltverzögerungsdauern von den erfassten Einschaltverzögerungsdauern die Abweichungsuntergrenze unterschreiten.

Die Erfindung nutzt aus, dass sich im drahtbruchfehlerfreien Betrieb des bürstenlosen Gleichstrommotors eine Einschaltverzögerungsdauer und eine Abschaltverzögerungsdauer, in denen während einer PWM-Taktperiode ein an einer Statorwicklungsphase anliegendes elektrisches Phasenpotential jeweils auf die Änderung eines PWM-Signals zeitverzögert reagiert, voneinander deutlich unterscheiden, während die Einschaltverzögerungsdauer und die Abschaltverzögerungsdauer bei einem die Statorwicklungsphase betreffenden Drahtbruch ganz oder fast übereinstimmen, wie unten näher erläutert wird. Daher ermöglicht ein Erfassen und Auswerten der Einschaltverzögerungsdauern und der Abschaltverzögerungsdauern, einen Drahtbruch dadurch zu erkennen, dass sich die Einschaltverzögerungsdauern und die Abschaltverzögerungsdauern nicht wesentlich voneinander unterscheiden.

Das Verfahren hat einerseits den Vorteil, dass sich damit ein Drahtbruch im laufenden Betrieb des Motors schnell und sicher erkennen lässt. Weiterhin ist das Verfahren auch für Motoren mit einem weiten Lastbereich anwendbar und relativ unabhängig von Signalrauschen. Ferner ermöglicht das Verfahren eine weitgehend temperaturunabhängige Drahtbrucherkennung, da es kaum von der Temperaturabhängigkeit von Diodenvorwärtsspannungen beeinflusst wird. Außerdem kann das Verfahren kostengünstig durch digitale logische Schaltungen implementiert werden, wie unten ausgeführt wird.

Eine Ausgestaltung der Erfindung sieht vor, dass für jede PWM-Taktperiode eine Verzögerungsdifferenz als Betrag der Differenz zwischen der in der PWM-Taktperiode erfassten Einschaltverzögerungsdauer und der in der PWM-Taktperiode erfassten Abschaltverzögerungsdauer ermittelt wird.

Eine derartige Verzögerungsdifferenz ist ein einfaches und effizientes Maß für die Abweichungen der Einschaltverzögerungsdauern von den Abschaltverzögerungsdauern und eignet sich daher vorteilhaft zur Auswertung dieser Abweichungen. Die in der Verzögerungsdifferenz enthaltene Betragsbildung berücksichtigt, dass je nach Schaltzustand der Motorsteuerung im drahtbruchfehlerfreien Motorbetrieb entweder die Einschaltverzögerungsdauer kleiner als die Abschaltverzögerungsdauer oder die Abschaltverzögerungsdauer kleiner als die Einschaltverzögerungsdauer ist, wie unten näher erläutert wird.

Eine Weitergestaltung dieser Ausgestaltung sieht vor, dass ein Differenzschwellenwert für die Verzögerungsdifferenzen vorgegeben wird und laufend eine momentane Unterschreitungsanzahl vorangegangener aufeinander folgender PWM-Taktperioden, in denen die Verzögerungsdifferenzen jeweils kleiner als der Differenzschwellenwert oder gleich dem Differenzschwellenwert war, erfasst wird.

Die so ermittelte Unterschreitungsanzahl ist ein geeignetes quantitatives Maß für eine Beurteilung der Abweichungen der Abschaltverzögerungsdauern von den Einschaltverzögerungsdauern.

Dabei wird die momentane Unterschreitungsanzahl vorzugsweise um Eins inkrementiert, wenn die Verzögerungsdifferenz in einer momentanen PWM-Taktperiode kleiner als der Differenzschwellenwert oder gleich dem Differenzschwellenwert ist, und auf Null gesetzt, wenn die Verzögerungsdifferenz in einer momentanen PWM-Taktperiode größer als der Differenzschwellenwert ist. Diese ermöglicht vorteilhaft eine besonders einfache Implementierung der Bestimmung der Unterschreitungsanzahl, beispielsweise mittels eines Zählregisters.

Eine Weitergestaltung der vorgenannten Ausgestaltungen der Erfindung sieht vor, dass ein Anzahlschwellenwert für die Unterschreitungsanzahl vorgegeben wird und dass als Abweichungsuntergrenze definiert wird, dass die momentane Unterschreitungsanzahl gleich dem Anzahlschwellenwert ist, so dass auf einen Drahtbruchfehler geschlossen wird, wenn die momentane Unterschreitungsanzahl den Anzahlschwellenwert übertrifft.

Dieses Kriterium eignet sich besonders vorteilhaft zur Erkennung eines Drahtbruchs, da es geringe Abweichungen der Abschaltverzögerungsdauern von den Einschaltverzögerungsdauern, die nicht von einem Drahtbruch, sondern von Strom- oder Spannungsschwankungen oder elektromotorischen Rückwirkungen verursacht werden, "herausfiltert", indem erst bei längerem und systematischem Auftreten geringer Abweichungen auf einen Drahtbruchfehler geschlossen wird. Dadurch wird eine Fehlerrate bei der Erkennung von Drahtbruchfehlern vorteilhaft reduziert.

Weitere Ausgestaltungen der Erfindung sehen vor, dass als Einschaltverzögerungsdauer für eine Statorwicklungsphase eine Zeitdauer von einem Einschaltwechsel des zugehörigen PWM-Signals zur Initiierung des Einstellens des Einschaltpotentials des Phasenpotentials bis zu dem tatsächlichen Erreichen dieses Einschaltpotentials erfasst wird, und/oder dass als Abschaltverzögerungsdauer entsprechend eine Zeitdauer von einem Abschaltwechsel des PWM-Signals zur Initiierung des Einstellens des Abschaltpotentials des Phasenpotentials bis zu dem tatsächlichen Erreichen des Abschaltpotentials erfasst wird.

Diese Ausgestaltungen nutzen vorteilhaft die Verfügbarkeit des PWM-Signals zur Definition und Erfassung der Einschaltverzögerungsdauern und/oder Abschaltverzögerungsdauern.

Eine erfindungsgemäße Vorrichtung umfasst eine Zeiterfassungseinheit zur Erfassung der Einschaltverzögerungsdauer und der Abschaltverzögerungsdauer für eine Statorwicklungsphase während einer PWM-Taktperiode, eine Komparatoreinheit zur Ermittelung einer Abweichung der während einer PWM-Taktperiode erfassten Abschaltverzögerungsdauer von der während der PWM-Taktperiode erfassten Einschaltverzögerungsdauer, und eine Auswerteeinheit zur Auswertung der von der Komparatoreinheit ermittelten Abweichungen.

Eine derartige Vorrichtung ermöglicht die Durchführung des erfindungsgemäßen Verfahrens mit den bereits oben genannten Vorteilen.

Die Zeiterfassungseinheit weist dabei vorzugsweise Eingänge zum Empfang eines PWM-Signals und eines Phasenpotentials auf und führt zeitgetaktete Zählschleifen aus, mittels derer nach einem Einschaltwechsel des PWM-Signals zur Initiierung des Einstellens eines Einschaltpotentials des Phasenpotentials eine Einschaltanzahl von aufeinander folgenden Zeitschritten bis zu dem tatsächlichen Erreichen dieses Einschaltpotentials und nach einem Abschaltwechsel des PWM-Signals zur Initiierung des Einstellens eines Abschaltpotentials des Phasenpotentials eine Abschaltanzahl von aufeinander folgenden Zeitschritten bis zu dem tatsächlichen Erreichen dieses Abschaltpotentials ermittelt werden.

Dadurch können die Einschaltverzögerungsdauern und Abschaltverzögerungsdauern vorteilhaft mittels einfacher digitaler logischer Schaltungen, die Zählschleifen realisieren, ermittelt werden.

Die Komparatoreinheit ermittelt ferner vorzugsweise eine Verzögerungsdifferenz als Betrag der Differenz zwischen der in der PWM-Taktperiode erfassten Einschaltverzögerungsdauer und der in der PWM-Taktperiode erfassten Abschaltverzögerungsdauer.

Dies ermöglicht vorteilhaft die oben genannte quantitative Auswertung der erfassten Einschaltverzögerungsdauern und Abschaltverzögerungsdauern.

Die Auswerteeinheit vergleicht dabei vorzugsweise die von der Komparatoreinheit ermittelte Verzögerungsdifferenz mit einem vorgegebenen Differenzschwellenwert und inkrementiert eine Unterschreitungsanzahl um Eins, wenn die Verzögerungsdifferenz in einer momentanen PWM-Taktperiode kleiner als der Differenzschwellenwert oder gleich dem Differenzschwellenwert ist, und setzt die Unterschreitungsanzahl auf Null, wenn die Verzögerungsdifferenz in einer momentanen PWM-Taktperiode größer als der Differenzschwellenwert ist.

Dies ermöglicht vorteilhaft die Realisierung des oben genannten Kriteriums zur Erkennung eines Drahtbruchs, das geringe Abweichungen der Abschaltverzögerungsdauern von den Einschaltverzögerungsdauern, die nicht von einem Drahtbruch verursacht werden, "herausfiltert".

Ausführungsbeispiele der Erfindung werden im Folgenden anhand von Zeichnungen näher erläutert.

Darin zeigen:
- Figur 1: schematisch eine Motorsteuerungsvorrichtung für einen bürstenlosen Gleichstrommotor,
- Figur 2: schematisch zeitliche Verläufe von elektrischen Spannungen einer elektrischen Halbbrücke zur Steuerung eines Phasenpotentials eines bürstenlosen Gleichstrommotors in einem ersten Schaltzustand der Halbbrücke,
- Figur 3: schematisch zeitliche Verläufe von elektrischen Spannungen einer elektrischen Halbbrücke zur Steuerung eines Phasenpotentials eines bürstenlosen Gleichstrommotors in einem zweiten Schaltzustand der Halbbrücke,

- Figur 4: schematisch zeitliche Verläufe von elektrischen Spannungen einer elektrischen Halbbrücke zur Steuerung eines Phasenpotentials eines bürstenlosen Gleichstrommotors im Falle eines Drahtbruchfehlers,
- Figur 5: ein Ablaufdiagramm eines Verfahrens zum Erkennen eines Drahtbruchfehlers beim Betrieb eines bürstenlosen Gleichstrommotors, und
- Figur 6: ein Blockdiagramm einer Vorrichtung zum Erkennen eines Drahtbruchfehlers beim Betrieb eines bürstenlosen Gleichstrommotors.

Einander entsprechende Teile sind in allen Figuren mit den gleichen Bezugszeichen versehen.

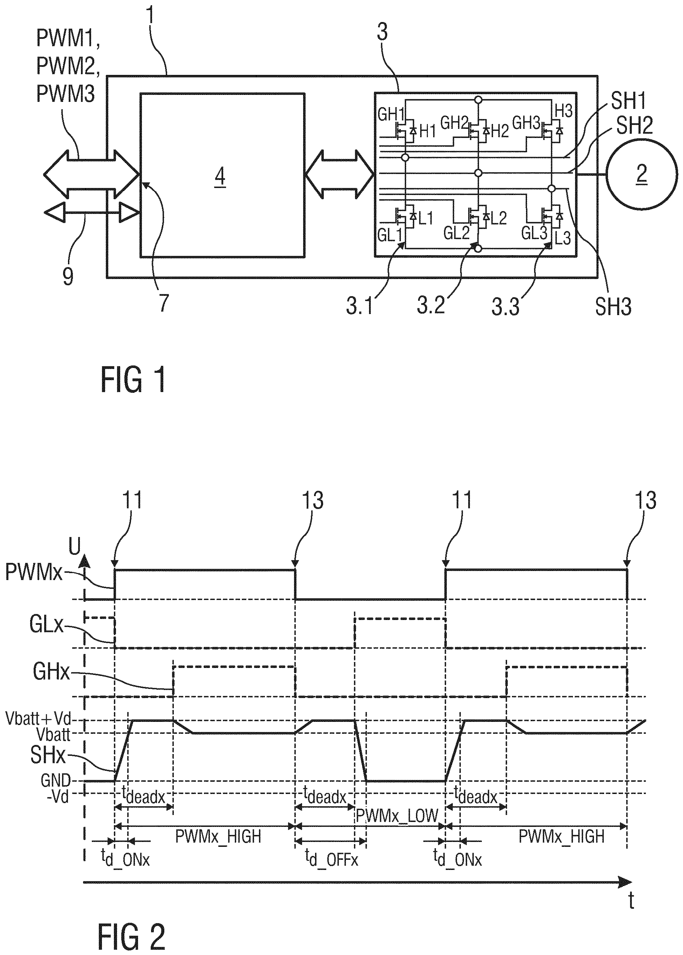

Figur 1 zeigt schematisch eine Motorsteuerungsvorrichtung 1 zur Kommutierung eines nicht näher dargestellten bürstenlosen Gleichstrommotors 2 mit einem Rotor und einer dreiphasigen Statorwicklung.

Die Motorsteuerungsvorrichtung 1 umfasst einen Umrichter 3, der für jede der drei Statorwicklungsphasen der Statorwicklung des Motors 2 eine elektrische Halbbrücke 3.1, 3.2, 3.3 aufweist. Jede Halbbrücke 3.1, 3.2, 3.3 weist einen ersten elektronischen Schalter H1, H2, H3 und einen zweiten elektronischen Schalter L1, L2, L3 auf, zwischen die die jeweilige Statorwicklungsphase des Motors 2 über einen Halbbrückenausgang SH1, SH2, SH3 geschaltet ist. Die ersten elektronischen Schalter H1, H2, H3 sind zueinander parallel geschaltet und mit einem Pluspol einer Spannungsversorgung des Umrichters 3 verbunden. Die zweiten elektronischen Schalter L1, L2, L3 sind ebenfalls zueinander parallel geschaltet und mit einem Minuspol der Spannungsversorgung verbunden. Die elektronischen Schalter H1, H2, H3, L1, L2, L3 sind in der dargestellten Ausführung des Umrichters 3 jeweils als ein MOSFET (Metall-Oxid-Halbleiter-Feldeffekttransistor) mit einem Steueranschluss (Gate) GH1, GH2, GH3, GL1, GL2, GL3 und einer Bodydiode ausgebildet.

Ferner umfasst die Motorsteuerungsvorrichtung 1 eine Steuereinheit 4 zur Steuerung der elektronischen Schalter H1, H2, H3, L1, L2, L3 mittels einer PWM (= Pulsweitenmodulation). Die Steuereinheit 4 weist wenigstens eine Schnittstelle 7 zum Empfang von Motorsteuersignalen, insbesondere der PWM-Signale PWM1, PWM2, PWM3 für die einzelnen Statorwicklungsphasen, und SPI-Kommunikationssignalen 9 (SPI = Serial Peripheral Interface) eines nicht dargestellten System-Mikrocontrollers auf.

Figur 2 zeigt schematisch für eine der Halbbrücken 3.1, 3.2, 3.3 Verläufe elektrischer Spannungen U in Abhängigkeit von einer Zeit t im drahtbruchfehlerfreien Betrieb des Motors 2. Dargestellt sind die Verläufe für einen Schaltzustand, bei dem während Totzeitintervallen t_{deadx} der Halbbrücke 3.1, 3.2, 3.3, in denen beide elektronischen Schalter H1, H2, H3, L1, L2, L3 der Halbbrücke 3.1, 3.2, 3.3 abgeschaltet sind, ein Freilaufstrom durch die Bodydiode des ersten elektronischen Schalters H1, H2, H3 der Halbbrücke 3.1, 3.2, 3.3 fließt.

PWMx bezeichnet das PWM-Signal PWM1, PWM2, PWM3 für die Steuerung der jeweiligen Statorwicklungsphase (x steht für eine der Ziffern 1, 2, 3). PWMx wechselt zwischen einem oberen PWM-Pegel und einem unteren PWM-Pegel und nimmt während ersten PWM-Zeitintervallen PWMx_HIGH den oberen PWM-Pegel und während zweiten PWM-Zeitintervallen PWMx_LOW den unteren PWM-Pegel an. Ein Einschaltwechsel 11 von dem unteren zu dem oberen PWM-Pegel initiiert das Einstellen eines Einschaltpotentials Vbatt eines am jeweiligen Halbbrückenausgang SH1, SH2, SH3 und damit an der jeweiligen Statorwicklungsphase (und dem zugehörigen Motoranschluss) anliegenden elektrischen Phasenpotentials SHx. Ein Abschaltwechsel 13 von dem oberen zu dem unteren PWM-Pegel initiiert das Einstellen eines Abschaltpotentials GND des Phasenpotentials SHx. Dabei ist Vbatt in diesem Fall ein Potential einer Versorgungsspannung und GND ist ein Erdungspotential, das das Potentialnullniveau definiert. Beim Ein- und Abschalten übersteigt das Phasenpotential SHx während der Totzeitintervalle t_{deadx} jeweils kurzzeitig das Einschaltpotential Vbatt um eine Diodenvorwärtsspannung Vd der Bodydiode des ersten elektronischen Schalters H1, H2, H3 aufgrund des durch die Bodydiode fließenden Freilaufstroms.

GLx bezeichnet ein am Steueranschluss GL1, GL2, GL3 des zweiten elektronischen Schalters L1, L2, L3 der jeweiligen Halbbrücke 3.1, 3.2, 3.3 anliegendes Steuerpotential. GHx bezeichnet ein am Steueranschluss GH1, GH2, GH3 des ersten elektronischen Schalters H1, H2, H3, L1, L2, L3 der Halbbrücke 3.1, 3.2, 3.3 anliegendes Steuerpotential. GLx und GHx wechseln in Abhängigkeit von PWMx zwischen einem oberen Potentialpegel und einem unteren Potentialpegel. Die Totzeitintervalle t_{deadx} sind diejenigen Zeitintervalle, in den GLx und GHx gleichzeitig den unteren Potentialpegel annehmen.

Das Phasenpotential SHx reagiert auf Änderungen von PWMx zeitverzögert. Zwischen einem Einschaltwechsel 11 bis zu dem dadurch initiierten Erreichen des Einschaltpotentials Vbatt vergeht eine Einschaltverzögerungsdauer t_{d_ONx}. Zwischen einem Abschaltwechsel 13 bis zu dem dadurch initiierten Erreichen des Abschaltpotentials GND vergeht eine Abschaltverzögerungsdauer t_{d_OFFX}. Aufgrund des durch die Bodydiode des ersten elektronischen Schalters H1, H2, H3 fließenden Freilaufstroms ist die Einschaltverzögerungsdauer t_{d_ONx} deutlich kleiner als die Abschaltverzögerungsdauer t_{d_OFFx}.

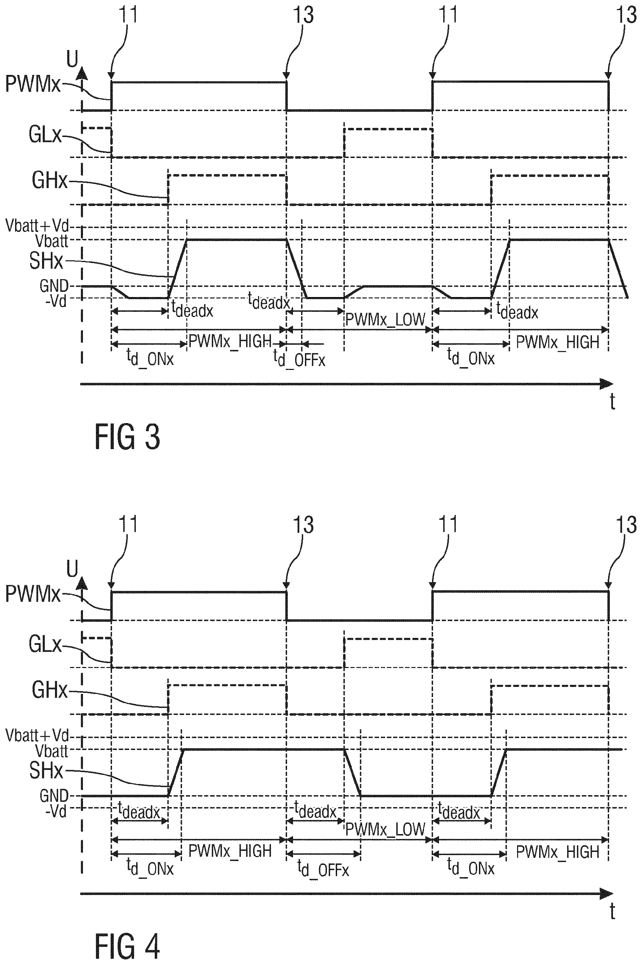

Figur 3 zeigt analog zu Figur 2 schematisch für eine der Halbbrücken 3.1, 3.2, 3.3 zeitliche Verläufe von PWMx, GLx, GHx und SHx im drahtbruchfehlerfreien Betrieb des Motors 2 für einen Schaltzustand, bei dem der Freilaufstrom während der Totzeitintervalle t_{deadx} durch die Bodydiode des zweiten elektronischen Schalters L1, L2, L3 der Halbbrücke 3.1, 3.2, 3.3 fließt.

Als Folge des Freilaufstroms durch die Bodydiode des zweiten elektronischen Schalters L1, L2, L3 unterschreitet SHx während der Totzeitintervalle t_{deadx} kurzzeitig das Abschaltpotential GND um die Diodenvorwärtsspannung Vd, und die Abschaltverzögerungsdauer t_{d_OFFx} ist deutlich kleiner als die Einschaltverzögerungsdauer t_{d_ONx}.

Figur 4 zeigt analog zu den Figuren 2 und 3 schematisch für eine der Halbbrücken 3.1, 3.2, 3.3 zeitliche Verläufe von PWMx, GLx, GHx und SHx beim Betrieb des Motors 2 im Falle eines die entsprechende Motorzuleitung betreffenden Drahtbruchfehlers. In diesem Fall fließt kein Freilaufstrom und als Folge davon stimmt die Abschaltverzögerungsdauer t_{d}__{OFFx} mit der Einschaltverzögerungsdauer t_{d_ONx} ganz oder fast überein.

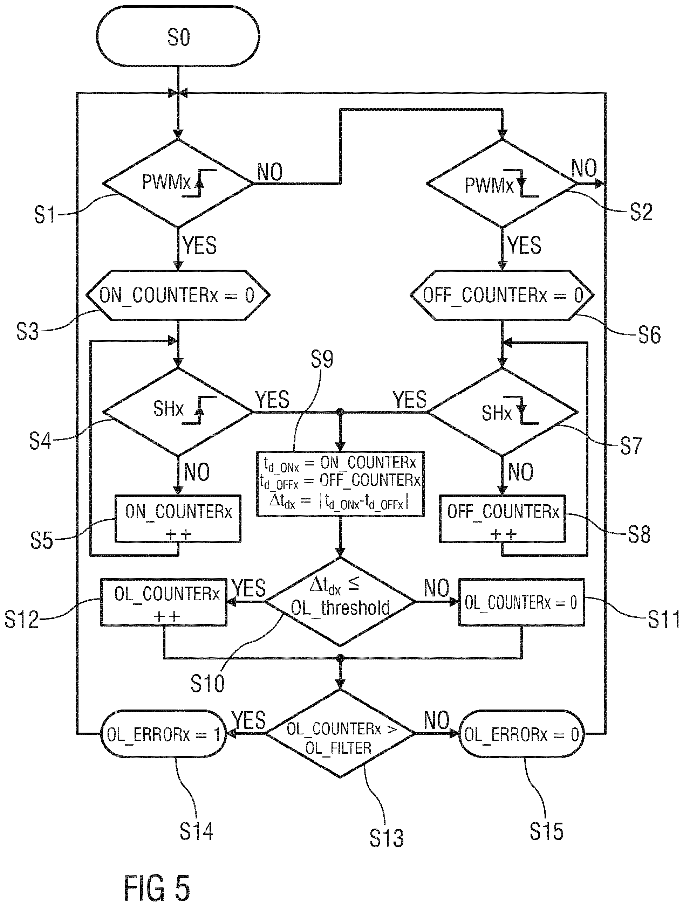

Figur 5 zeigt ein Ablaufdiagramm eines Verfahrens zum Erkennen eines Drahtbruchfehlers beim Betrieb eines bürstenlosen Gleichstrommotors 2. Das Verfahren nutzt aus, dass im Falle eines eine Statorwicklungsphase betreffenden Drahtbruchfehlers die Abschaltverzögerungsdauer t_{d_OFFx} fast oder ganz mit der Einschaltverzögerungsdauer t_{d_ONx} übereinstimmt, während sie ohne einen Drahtbruchfehler deutlich von der Einschaltverzögerungsdauer t_{d_ONx} abweicht, wie anhand der Figuren 2 bis 4 ausgeführt wurde.

Bei dem Verfahren werden zeitgetaktet Verfahrensschritte S1 bis S 15 durchgeführt, wobei die Taktfrequenz deutlich höher als die PWM-Frequenz der PWM ist, so dass ein Zeitschritt zwischen aufeinander folgenden Verfahrensschritten S1 bis S15 sehr viel kleiner als die PWM-Taktperiode ist.

Nach einem Verfahrensaufruf S0 wird in einem ersten Verfahrensschritt S1 geprüft, ob ein Einschaltwechsel 11 von PWMx erfolgt ist. Sollte dies nicht der Fall sein, wird in einem zweiten Verfahrensschritt S2 geprüft, ob ein Abschaltwechsel 13 erfolgt ist. Falls auch dies nicht der Fall ist, wird der erste Verfahrensschritt S1 wiederholt.

Sollte bei einem ersten Verfahrensschritt S1 ein Einschaltwechsel 11 erkannt werden, wird in einem dritten Verfahrensschritt S3 eine Einschaltanzahl ON_COUNTERx mit dem Wert Null initialisiert. In einem vierten Verfahrensschritt S4 wird anschließend geprüft, ob das Phasenpotential SHx das Einschaltpotential Vbatt erreicht hat. Wenn dies nicht der Fall ist, wird in einem fünften Verfahrensschritt S5 die Einschaltanzahl ON_COUNTERx um Eins inkrementiert und danach der vierte Verfahrensschritt S4 wiederholt.

Die Verfahrensschritte S4 und S5 werden dadurch so oft wiederholt, bis im vierten Verfahrensschritt S4 erkannt wird, dass das Phasenpotential SHx das Einschaltpotential Vbatt erreicht hat. Wenn dies geschieht, ist die aktuelle Einschaltanzahl ON_COUNTERx ein direktes Maß für die Einschaltverzögerungsdauer t_{d_ONx} in der jeweiligen PWM-Taktperiode, gemessen in Einheiten eines Zeitschrittes zwischen zwei aufeinander folgenden Verfahrensschritten S1 bis S 15.

Analog wird verfahren, wenn im zweiten Verfahrensschritt S2 erkannt wird, dass ein Abschaltwechsel 13 erfolgt ist. In diesem Fall wird in einem sechsten Verfahrensschritt S6 eine Abschaltanzahl OFF_COUNTERx mit dem Wert Null initialisiert. In einem siebten Verfahrensschritt S7 wird anschließend geprüft, ob das Phasenpotential SHx das Abschaltpotential GND erreicht hat. Wenn dies nicht der Fall ist, wird in einem achten Verfahrensschritt S8 die Abschaltanzahl OFF_COUNTERx um Eins inkrementiert und danach der siebte Verfahrensschritt S7 wiederholt. Die Verfahrensschritte S7 und S8 werden dadurch so oft wiederholt, bis im siebten Verfahrensschritt S7 erkannt wird, dass das Phasenpotential SHx das Abschaltpotential GND erreicht hat. Wenn dies geschieht, ist die aktuelle Abschaltanzahl OFF_COUNTERx ein direktes Maß für die Abschaltverzögerungsdauer t_{d_OFFx} in der jeweiligen PWM-Taktperiode, gemessen in Einheiten eines Zeitschrittes zwischen zwei aufeinander folgenden Verfahrensschritten S1 bis S15.

In einem neunten Verfahrensschritt S9 werden die Einschaltzahl ON_COUNTERx nach einem in S4 erkannten Erreichen des Einschaltpotentials Vbatt als Einschaltverzögerungsdauer t_{d_ONx} und die Abschaltanzahl OFF_COUNTERx nach einem in S7 erkannten Erreichen des Abschaltpotentials GND als Abschaltverzögerungsdauer t_{d_OFFx} gespeichert. Ferner wird eine Verzögerungsdifferenz Δt_{dx} als Betrag |t_{d_ONx} - t_{d_OFFx}| der Differenz t_{d_ON}x - t_{d_OFFx} gebildet.

In einem zehnten Verfahrensschritt S10 wird geprüft, ob die Verzögerungsdifferenz Δt_{dx} größer als ein vorgegebener Differenzschwellenwert OL_threshold ist. Wenn dies der Fall ist, wird eine Unterschreitungsanzahl OL_COUNTERx in einem elften Verfahrensschritt S11 auf den Wert Null gesetzt. Andernfalls wird die Unterschreitungsanzahl OL_COUNTERx in einem zwölften Verfahrensschritt S 12 um Eins inkrementiert (die Unterschreitungsanzahl OL_COUNTERx wird bei dem Verfahrensaufruf S0 mit dem Wert Null initialisiert).

In einem dreizehnten Verfahrensschritt S13 wird anschließend geprüft, ob die Unterschreitungsanzahl OL_COUNTERx größer als ein vorgegebener Anzahlschwellenwert OL_FILTER ist. Wenn dies der Fall ist, wird in einem vierzehnten Verfahrensschritt S14 ein Drahtbruchfehlersignal OL_ERRORx auf den Wert Eins gesetzt, um einen Drahtbruchfehler für die jeweilige Statorwicklungsphase zu signalisieren. Andernfalls wird in einem fünfzehnten Verfahrensschritt S 15 Drahtbruchfehlersignal OL_ERRORx auf den Wert Null gesetzt.

Das anhand von Figur 5 beschriebene Verfahren wird separat für jede Statorwicklungsphase des Motors 2 bzw. für jede Halbbrücke 3.1, 3.2, 3.3 des Umrichters 3 durchgeführt.

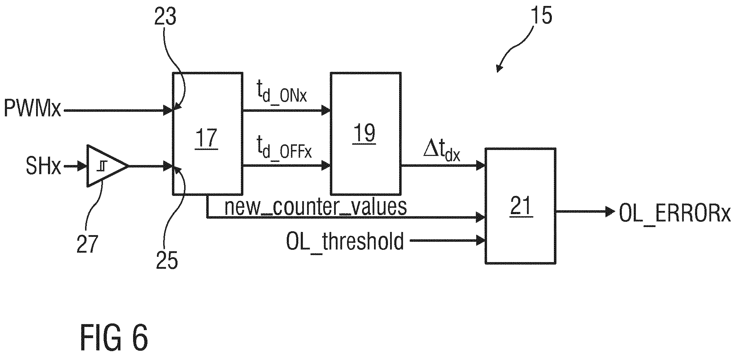

Figur 6 zeigt ein Blockdiagramm einer Vorrichtung 15 zur Durchführung des in Figur 5 gezeigten Verfahrens zum Erkennen eines Drahtbruchfehlers beim Betrieb eines bürstenlosen Gleichstrommotors 2.

Die Vorrichtung 15 umfasst eine Zeiterfassungseinheit 17 zur Erfassung der Einschaltverzögerungsdauer t_{d_ONx} und der Abschaltverzögerungsdauer t_{d_OFFx} für eine Statorwicklungsphase während einer PWM-Taktperiode, eine Komparatoreinheit 19 zur Ermittelung einer Abweichung der während einer PWM-Taktperiode erfassten Abschaltverzögerungsdauer t_{d_OFFx} von der während der PWM-Taktperiode erfassten Einschaltverzögerungsdauer t_{d_ONx} und eine Auswerteeinheit 21 zur Auswertung der von der Komparatoreinheit 19 ermittelten Abweichungen.

Die Zeiterfassungseinheit 17 weist einen ersten Eingang 23 zum Empfang von PMWx und einen zweiten Eingang 25 zum Empfang eines von einem Pegelumsetzer 27 geeignet angepassten Phasenpotentials SHx auf. Die Zeiterfassungseinheit 17 ist zur Ausführung der oben beschriebenen Verfahrensschritte S1 bis S8 ausgebildet und erfasst entsprechend in Abhängigkeit von PWMx und SHx während jeder PWM-Taktperiode die Einschaltverzögerungsdauer t_{d_ONx} und die Abschaltverzögerungsdauer t_{d_OFFx} und übergibt der Komparatoreinheit 19 die erfasste Einschaltverzögerungsdauer t_{d_ONx} und die erfasste Abschaltverzögerungsdauer t_{d_OFFx}. Ferner übergibt die Zeiterfassungseinheit 17 der Auswerteeinheit 21 ein Hinweissignal new_counter_values, das die Erfassung neuer Messsignale durch die Zeiterfassungseinheit 17 signalisiert.

Die Komparatoreinheit 19 führt den oben beschriebenen Verfahrensschritt S9 durch, d.h. ermittelt die Verzögerungsdifferenz Δt_{dx} als Betrag |t_{d_ONx} - t_{d_OFFx}| der Differenz t_{d_ONx} - t_{d_OFFx}, und übergibt der Auswerteeinheit 21 die ermittelte Verzögerungsdifferenz Δt_{dx}.

Die Auswerteeinheit 21 führt die oben beschriebenen Verfahrensschritte S10 bis S 15 durch, d.h. sie vergleicht die von der Komparatoreinheit 19 ermittelte Verzögerungsdifferenz Δt_{dx} mit einem vorgegebenen, ihr zugeführten Differenzschwellenwert OL_threshold, und inkrementiert den Wert einer Unterschreitungsanzahl OL_COUNTERx um Eins, wenn die Verzögerungsdifferenz Δt_{dx} kleiner als der oder gleich dem Differenzschwellenwert OL_threshold ist, bzw. setzt den Wert der Unterschreitungsanzahl OL_COUNTERx auf Null, wenn die Verzögerungsdifferenz Δt_{dx} in einer momentanen PWM-Taktperiode größer als der Differenzschwellenwert OL_threshold ist. Ferner ermittelt sie, ob die Unterschreitungsanzahl OL_COUNTERx größer als ein vorgegebener Anzahlschwellenwert OL_FILTER ist, setzt dementsprechend den Wert des Drahtbruchfehlersignals OL_ERRORx und gibt diesen aus.

Eine in Figur 6 dargestellte Vorrichtung 15 wird separat für jede Statorwicklungsphase des Motors 2 bzw. für jede Halbbrücke 3.1, 3.2, 3.3 des Umrichters 3 implementiert.

### BEZUGSZEICHENLISTE

- 1: Motorsteuerungsvorrichtung
- 2: bürstenloser Gleichstrommotor
- 3: Umrichter
- 3.1,3.2,3.3: Halbbrücke
- 4: Steuereinheit
- 7: Schnittstelle
- 9: SPI-Kommunikationssignal
- 11: Einschaltwechsel
- 13: Abschaltwechsel
- 15: Vorrichtung
- 17: Zeiterfassungseinheit
- 19: Komparatoreinheit
- 21: Auswerteeinheit
- 23: erster Eingang
- 25: zweiter Eingang
- 27: Pegelumsetzer
- Δt_{dx}: Verzögerungsdifferenz
- GH1, GH2, GH3, GL1, GL2, GL3: Steueranschluss (Gate)
- GHx, GLx: Steuerpotential
- GND: Abschaltpotential
- H1, H2, H3: erster elektronischer Schalter
- L1, L2, L3: zweiter elektronischer Schalter
- new_counter_values: Hinweissignal
- OFF_COUNTERx: Abschaltanzahl
- OL_COUNTERx: Unterschreitungsanzahl
- OL_ERRORx: Drahtbruchfehlersignal
- OL_FILTER: Anzahlschwellenwert
- OL_threshold: Differenzschwellenwert
- ON_COUNTERx: Einschaltanzahl
- PWM1, PWM2, PWM3. PWMx: PWM-Signal
- PWMx_HIGH: erstes PWM-Zeitintervall
- PWMx_LOW: zweites PWM-Zeitintervall
- S0: Verfahrensaufruf
- S1 bis S15: Verfahrensschritt
- SH1, SH2, SH3: Halbbrückenausgang
- SHx: Phasenpotential
- t: Zeit
- t_{deadx}: Totzeitintervall
- t_{d_OFFx}: Abschaltverzögerungsdauer
- t_{d_ONx}: Einschaltverzögerungsdauer
- U: Spannung
- Vbatt: Einschaltpotential
- Vd: Diodenvorwärtsspannung

## Patentansprüche

1. Verfahren zum Erkennen eines Drahtbruchfehlers beim Betrieb eines bürstenlosen Gleichstrommotors (2), der eine dreiphasige Statorwicklung aufweist und mit einer Pulsweitenmodulation gesteuert wird, wobei
- für wenigstens eine Statorwicklungsphase der Statorwicklung während jeder Pulsweitenmodulations-Taktperiode eine Einschaltverzögerungsdauer (t_{d_ONx}) eines Übergangs eines an der Statorwicklungsphase anliegenden elektrischen Phasenpotentials (SHx) von einem Abschaltpotential (GND) zu einem Einschaltpotential (Vbatt) und eine Abschaltverzögerungsdauer (t_{d_OFFx}) des Übergangs dieses Phasenpotentials (SHx) von dem Einschaltpotential (Vbatt) zu dem Abschaltpotential (GND) erfasst werden,
- eine Abweichungsuntergrenze für ein Abweichen erfasster Abschaltverzögerungsdauern (t_{d_OFFx}) von erfassten Einschaltverzögerungsdauern (t_{d_ONx}) definiert wird
- und auf einen Drahtbruchfehler geschlossen wird, wenn die Abweichungen der erfassten Abschaltverzögerungsdauern (t_{d_OFFx}) von den erfassten Einschaltverzögerungsdauern (t_{d_ONx}) die Abweichungsuntergrenze unterschreiten.

2. Verfahren nach Anspruch 1,
**dadurch gekennzeichnet, dass** für jede Pulsweitenmodulations-Taktperiode eine Verzögerungsdifferenz (Δt_{dx}) als Betrag der Differenz zwischen der in der Pulsweitenmodulations-Taktperiode erfassten Einschaltverzögerungsdauer (t_{d_ONx}) und der in der Pulsweitenmodulations-Taktperiode erfassten Abschaltverzögerungsdauer (t_{d_OFFx}) ermittelt wird.

3. Verfahren nach Anspruch 2,
**dadurch gekennzeichnet, dass** ein Differenzschwellenwert (OL_threshold) für die Verzögerungsdifferenzen (Δt_{dx}) vorgegeben wird und laufend eine momentane Unterschreitungsanzahl (OL_COUNTERx) vorangegangener aufeinander folgender Pulsweitenmodulations-Taktperioden, in denen die Verzögerungsdifferenzen (Δt_{dx}) jeweils kleiner als der Differenzschwellenwert (OL threshold) oder gleich dem Differenzschwellenwert (OL threshold) war, erfasst wird.

4. Verfahren nach Anspruch 3,
**dadurch gekennzeichnet, dass** die momentane Unterschreitungsanzahl (OL_COUNTERx) um Eins inkrementiert wird, wenn die Verzögerungsdifferenz (Δt_{dx}) in einer momentanen Pulsweitenmodulations-Taktperiode kleiner als der Differenzschwellenwert (OL_threshold) oder gleich dem Differenzschwellenwert (OL threshold) ist, und auf Null gesetzt wird, wenn die Verzögerungsdifferenz (Δt_{dx}) in einer momentanen Pulsweitenmodulations-Taktperiode größer als der Differenzschwellenwert (OL_threshold) ist.

5. Verfahren nach Anspruch 3 oder 4,
**dadurch gekennzeichnet, dass** ein Anzahlschwellenwert (OL_FILTER) für die Unterschreitungsanzahl (OL_COUNTERx) vorgegeben wird und als Abweichungsuntergrenze definiert wird, dass die momentane Unterschreitungsanzahl (OL_COUNTERx) gleich dem Anzahlschwellenwert (OL_FILTER) ist, so dass auf einen Drahtbruchfehler geschlossen wird, wenn die momentane Unterschreitungsanzahl (OL_COUNTERx) den Anzahlschwellenwert (OL_FILTER) übertrifft.

6. Verfahren nach einem der vorhergehenden Ansprüche,
**dadurch gekennzeichnet, dass** als Einschaltverzögerungsdauer (t_{d_ONx}) für eine Statorwicklungsphase eine Zeitdauer von einem Einschaltwechsel (11) des zugehörigen Pulsweitenmodulations-Signals (PWM1, PWM2, PWM3, PWMx) zur Initiierung des Einstellens des Einschaltpotentials (Vbatt) des Phasenpotentials (SHx) bis zu dem tatsächlichen Erreichen dieses Einschaltpotentials (Vbatt) erfasst wird.

7. Verfahren nach einem der vorhergehenden Ansprüche,
**dadurch gekennzeichnet, dass** als Abschaltverzögerungsdauer (t_{d_OFFx}) eine Zeitdauer von einem Abschaltwechsel (13) des Pulsweitenmodulations-Signals (PWM1, PWM2, PWM3, PWMx) zur Initiierung des Einstellens des Abschaltpotentials (GND) des Phasenpotentials (SHx) bis zu dem tatsächlichen Erreichen des Abschaltpotentials (GND) erfasst wird.

8. Vorrichtung (15) zur Durchführung des Verfahrens nach einem der vorhergehenden Ansprüche, umfassend
- eine Zeiterfassungseinheit (17) zur Erfassung der Einschaltverzögerungsdauer (t_{d_ONx}) und der Abschaltverzögerungsdauer (t_{d_OFFx}) für eine Statorwicklungsphase während einer Pulsweitenmodulations-Taktperiode,
- eine Komparatoreinheit (19) zur Ermittelung einer Abweichung der während einer Pulsweitenmodulations-Taktperiode erfassten Abschaltverzögerungsdauer (t_{d_OFFx}) von der während der Pulsweitenmodulations-Taktperiode erfassten Einschaltverzögerungsdauer (t_{d_ONx}),
- und eine Auswerteeinheit (21) zur Auswertung der von Komparatoreinheit (19) ermittelten Abweichungen.

9. Vorrichtung (15) nach Anspruch 8,
**dadurch gekennzeichnet, dass** die Zeiterfassungseinheit (17) Eingänge (23, 25) zum Empfang eines Pulsweitenmodulations-Signals (PWM1, PWM2, PWM3, PWMx) und eines Phasenpotentials (SHx) aufweist und zeitgetaktete Zählschleifen ausführt, mittels derer nach einem Einschaltwechsel (11) des Pulsweitenmodulations-Signals (PWM1, PWM2, PWM3, PWMx) zur Initiierung des Einstellens eines Einschaltpotentials (Vbatt) des Phasenpotentials (SHx) eine Einschaltanzahl (ON_COUNTERx) von aufeinander folgenden Zeitschritten bis zu dem tatsächlichen Erreichen dieses Einschaltpotentials (Vbatt) und nach einem Abschaltwechsel (13) des Pulsweitenmodulations-Signals (PWM1, PWM2, PWM3, PWMx) zur Initiierung des Einstellens eines Abschaltpotentials (GND) des Phasenpotentials (SHx) eine Abschaltanzahl (OFF_COUNTERx) von aufeinander folgenden Zeitschritten bis zu dem tatsächlichen Erreichen dieses Abschaltpotentials (GND) ermittelt werden.

10. Vorrichtung (15) nach Anspruch 8 oder 9,
**dadurch gekennzeichnet, dass** die Komparatoreinheit (19) eine Verzögerungsdifferenz (Δt_{dx}) als Betrag der Differenz zwischen der in der Pulsweitenmodulations-Taktperiode erfassten Einschaltverzögerungsdauer (t_{d_ONx}) und der in der Pulsweitenmodulations-Taktperiode erfassten Abschaltverzögerungsdauer (t_{d_OFFx}) ermittelt.

11. Vorrichtung (15) nach Anspruch 10,
**dadurch gekennzeichnet, dass** die Auswerteeinheit (21) die von der Komparatoreinheit (19) ermittelte Verzögerungsdifferenz (Δt_{dx}) mit einem vorgegebenen Differenzschwellenwert (OL threshold) vergleicht und eine Unterschreitungsanzahl (OL_COUNTERx) um Eins inkrementiert, wenn die Verzögerungsdifferenz (Δt_{dx}) in einer momentanen Pulsweitenmodulations-Taktperiode kleiner als der Differenzschwellenwert (OL_threshold) oder gleich dem Differenzschwellenwert (OL_threshold) ist, und die Unterschreitungsanzahl (OL_COUNTERx) auf Null setzt, wenn die Verzögerungsdifferenz (Δt_{dx}) in einer momentanen Pulsweitenmodulations-Taktperiode größer als der Differenzschwellenwert (OL_threshold) ist.

## Claims

1. Method for the detection of a wire-break fault during the operation of a brushless d.c. motor (2) which is provided with a three-phase stator winding and is controlled by means of pulse width modulation, wherein
- for at least one stator winding phase of the stator winding during each pulse width modulation cycle period, a switch-on delay interval (t_{d_ONx}) for a transition of an electrical phase potentials (SHx) applied to the stator winding phase from a switch-off potential (GND) to a switch-on potential (Vbatt) and a switch-off delay interval (t_{d_OFFx}) for the transition of said phase potential (SHx) from the switch-on potential (Vbatt) to the switch-off potential (GND) are recorded,
- a lower deviation limit is defined for a deviation of the recorded switch-off delay intervals (t_{d_OFFx}) from the recorded switch-on delay intervals (t_{d_ONx}),
- and a wire-break fault is deduced if the deviations of the recorded switch-off delay intervals (t_{d_OFFx}) from the recorded switch-on delay intervals (t_{d_ONx}) fall below the lower deviation limit.

2. Method according to Claim 1,
**characterized in that**, for each pulse width modulation cycle period, a delay margin (Δt_{dx}) is determined as the magnitude of the difference between the switch-on delay interval (t_{d_ONx}) recorded in said pulse width modulation cycle period and the switch-off delay interval (t_{d_OFFx}) recorded in said pulse width modulation cycle period.

3. Method according to Claim 2,
**characterized in that** a differential threshold value (OL_threshold) is stipulated for the delay margins (Δt_{dx}) and, on a continuous basis, an instantaneous under-range number (OL_COUNTERx) of previous sequential pulse width modulation cycle periods, during which the delay margins (Δt_{dx}) were respectively smaller than the differential threshold value (OL_threshold) or equal to the differential threshold value (OL_threshold), is recorded.

4. Method according to Claim 3,
**characterized in that** the instantaneous under-range number (OL_COUNTERx) is incremented by one, where the delay margin (Δt_{dx}) in an instantaneous pulse width modulation cycle period is smaller than the differential threshold value (OL_threshold) or equal to the differential threshold value (OL_threshold), and is set to zero, where the delay margin (Δt_{dx}) in an instantaneous pulse width modulation cycle period is greater than the differential threshold value (OL_threshold).

5. Method according to Claim 3 or 4,
**characterized in that** a number threshold value (OL_FILTER) is stipulated for the under-range number (OL_COUNTERx), and the lower limit of deviation is defined such that the instantaneous under-range number (OL_COUNTERx) is equal to the number threshold value (OL_FILTER), such that a wire-break fault will be deduced where the instantaneous underrange number (OL_COUNTERx) exceeds the number threshold value (OL_FILTER).

6. Method according to one of the preceding claims,
**characterized in that**, as a switch-on delay interval (t_{d_ONx}) for a stator winding phase, a time interval between a switch-on changeover (11) of the associated pulse width modulation signal (PWM1, PWM2, PWM3, PWMx) for the initiation of the setting of the switch-on potential(Vbatt) of the phase potential (SHx) and the actual achievement of said switch-on potential (Vbatt) is recorded.

7. Method according to one of the preceding claims, **characterized in that**, as a switch-off delay interval (t_{d_OFFx}), a time interval between a switch-off changeover (13) of the pulse width modulation signal (PWM1, PWM2, PWM3, PWMx) for the initiation of the setting of the switch-off potential (GND) of the phase potential (SHx) and the actual achievement of said switch-off potential (GND) is recorded.

8. Device (15) for the execution of the method according to one of the preceding claims, comprising
- a time recording unit (17) for the recording of the switch-on delay interval (t_{d_ONx}) and the switch-off delay interval (t_{d_OFFx}) for a stator winding phase during a pulse width modulation cycle period,
- a comparator unit (19) for the determination of a deviation between the switch-off delay interval (t_{d_OFFx}) recorded in a given pulse width modulation cycle period and the switch-on delay interval (t_{d_ONx}) recorded in a given pulse width modulation cycle period,
- and an evaluation unit (21) for the evaluation of deviations identified by the comparator unit (19).

9. Device (15) according to Claim 8,
**characterized in that** the time recording unit (17) is provided with inputs (23, 25) for the reception of a pulse width modulation signal (PWM1, PWM2, PWM3, PWMx) and a phase potential (SHx), and executes time-cycle counting loops by means of which, following a switch-on changeover (11) of the pulse width modulation signal (PWM1, PWM2, PWM3, PWMx) for the initiation of the setting of a switch-on potential (Vbatt) for the phase potential (SHx), a switch-on number (ON_COUNTERx) of sequential time increments through to the actual achievement of said switch-on potential (Vbatt) is determined and, following a switch-off changeover (13) of the pulse width modulation signal (PWM1, PWM2, PWM3, PWMx) for the initiation of the setting of a switch-off potential (GND) for the phase potential (SHx), a switch-off number (OFF_OUNTERx) of sequential time increments through to the actual achievement of said switch-off potential (GND) is determined.

10. Device (15) according to Claim 8 or 9,
**characterized in that** the comparator unit (19) determines a delay margin (Δt_{dx}) as the magnitude of the difference between the switch-on delay interval (t_{d_ONx}) recorded in the pulse width modulation cycle period and the switch-off delay interval (t_{d_OFFx}) recorded in the pulse width modulation cycle period.

11. Device (15) according to Claim 10,
**characterized in that** the evaluation unit (21) compares the delay margin (Δt_{dx}) determined by the comparator unit (19) with a stipulated differential threshold value (OL_threshold), and increments an underrange number (OL_COUNTERx) by one, where the delay margin (Δt_{dx}) in an instantaneous pulse width modulation cycle period is smaller than the differential threshold value (OL_threshold) or equal to the differential threshold value (OL threshold), and sets the under-range number (OL_COUNTERx) to zero, where the delay margin (Δt_{dx}) in an instantaneous pulse width modulation cycle period is greater than the differential threshold value (OL_threshold).

## Revendications

1. Procédé de détection d'une erreur de coupure de fil lors du fonctionnement d'un moteur à courant continu sans balais (2) qui comporte un enroulement de stator triphasé et est commandé par modulation d'impulsion en largeur, dans lequel
- pour au moins une phase de l'enroulement de stator, pendant chaque période d'horloge de la modulation d'impulsion en largeur, on détecte une durée de retard d'activation (t_{d_ONx}) du passage d'un potentiel de phase électrique (SHx) appliqué à la phase de l'enroulement de stator d'un potentiel de désactivation (GND) à un potentiel d'activation (Vbatt) et une durée de retard de désactivation (t_{d_OFFx}) du passage d'un potentiel de phase (SHx) du potentiel d'activation (Vbatt) au potentiel de désactivation (GND),
- on définit une limite inférieure d'écart pour un écart entre des durées de retard de désactivation (t_{d_OFFx}) détectées et des durées de retard d'activation (t_{d_ONx}) détectées,
- et on considère qu'il se produit une erreur de coupure de fil lorsque les écarts entre les durées de retard de désactivation (t_{d_OFFx}) détectées et les durées de retard d'activation (t_{d_ONx}) détectées s'abaissent en dessous de la limite inférieure d'écart.

2. Procédé selon la revendication 1,
**caractérisé en ce que**, pour chaque période d'horloge de la modulation d'impulsion en largeur, une différence de retard (Δt_{dx}) est déterminée comme étant la valeur de la différence entre la durée de retard d'activation (t_{d_ONx}) détectée au cours de la période d'horloge de la modulation d'impulsion en largeur et la durée de retard de désactivation (t_{d_OFFx}) détectée au cours de la période d'horloge de la modulation d'impulsion en largeur.

3. Procédé selon la revendication 2,
**caractérisé en ce qu'**on détecte en continu une valeur de seuil de différence (OL_threshold) pour les différences de retard (Δt_{dx}) est prédéterminée et le compte de dépassements inférieurs (OL_COUNTERx) instantané de périodes d'horloge de la modulation d'impulsions en largeur précédentes consécutives au cours desquelles les différences de retard (Δt_{dx}) sont respectivement inférieures à la valeur de seuil de différence (OL_threshold) ou égale à la valeur de seuil de différence (OL_threshold).

4. Procédé selon la revendication 3,
**caractérisé en ce que** le compte de dépassements inférieurs instantané (OL_COUNTERx) est incrémenté de 1 lorsque la différence de retard (Δt_{dx}) au cours d'une période d'horloge de la modulation d'impulsion en largeur instantanée est inférieure à la valeur de seuil de différence (OL_threshold) ou égale à la valeur de seuil de différence (OL_threshold), et est mise à zéro lorsque la différence de retard (Δt_{dx}) au cours d'une période d'horloge de la modulation d'impulsion en largeur instantanée est supérieure à la valeur de seuil de différence (OL_threshold).

5. Procédé selon la revendication 3 ou 4,
**caractérisé en ce qu'**une valeur de seuil de compte (OL_FILTER) pour le compte de dépassements inférieurs (OL_COUNTERx) est prédéterminée et est définie comme étant une limite inférieure de d'écart, **en ce que** le compte de dépassements inférieurs instantané (OL_COUNTERx) est égal à la valeur de seuil de compte (OL_FILTER) de telle sorte qu'on considère qu'il s'est produit une erreur de coupure de fil lorsque le compte de dépassements inférieurs instantané (OL_COUNTERx) dépasse la valeur de seuil de compte (OL_FILTER).

6. Procédé selon l'une quelconque des revendications précédentes,
**caractérisé en ce que**, en tant que durée de retard d'activation (t_{d_ONx}) pour une phase de l'enroulement de stator, on détecte un intervalle de temps allant d'un basculement d'activation (11) du signal de modulation d'impulsion en largeur (PWM1, PWM2, PWM3, PWMx) correspondant, pour déclencher le réglage du potentiel d'activation (Vbatt) du potentiel de phase (SHx), jusqu'à ce que ledit potentiel d'activation (Vbatt) soit effectivement atteint.

7. Procédé selon l'une quelconque des revendications précédentes,
**caractérisé en ce qu'**on détecte, en tant que durée de retard de désactivation (t_{d_OFFx}), un intervalle de temps allant d'un basculement de désactivation (13) du signal de modulation d'impulsion en largeur (PWM1, PWM2, PWM3, PWMx), pour déclencher le réglage du potentiel d'activation (GND) du potentiel de phase (SHx), jusqu'à ce que le potentiel d'activation (GND) soit effectivement atteint.

8. Dispositif (15) destiné à mettre en oeuvre le procédé selon l'une quelconque des revendications précédentes, comprenant :
- une unité de détection de temps (17) destinée à détecter la durée de retard d'activation (t_{d_ONx}) et la durée de retard de désactivation (t_{d_OFFx}) pour une phase d'un enroulement de stator pendant une période d'horloge de la modulation d'impulsion en largeur,
- une unité comparatrice (19) destinée à déterminer un écart entre la durée de retard de désactivation (t_{d_OFFx}) détectée pendant une période d'horloge de la modulation d'impulsion en largeur et la durée de retard d'activation (t_{d_ONx}) détectée pendant la période d'horloge de la modulation d'impulsion en largeur,
- et une unité d'évaluation (21) destinée à évaluer les écarts déterminés par l'unité comparatrice (19).

9. Dispositif (15) selon la revendication 8,
**caractérisé en ce que** l'unité de détection de temps (17) comprend des entrées (23, 25) destinées à recevoir un signal de modulation d'impulsion en largeur (PWM1, PWM2, PWM3, PWMx) et un potentiel de phase (SHx) et met en oeuvre des boucles de comptage cadencées temporellement au moyen desquelles on détermine, après un basculement d'activation (11) du signal de modulation d'impulsion en largeur (PWM1, PWM2, PWM3, PWMx) destiné à déclencher le réglage d'un potentiel d'activation (Vbatt) du potentiel de phase (SHx), un compte d'activations (ON_COUNTERx) de pas temporels consécutifs allant jusqu'à ce que ledit potentiel d'activation (Vbatt) soit effectivement atteint et, après un basculement de désactivation (13) du signal de modulation d'impulsion en largeur (PWM1, PWM2, PWM3, PWMx) destiné à déclencher le réglage d'un potentiel de désactivation (GND) du potentiel de phase (SHx), un compte de désactivations (OFF_COUNTERx) de pas temporels consécutifs allant jusqu'à ce que ledit potentiel de désactivation (GND) soit effectivement atteint.

10. Dispositif (15) selon la revendication 8 ou 9,
**caractérisé en ce que** l'unité comparatrice (19) détermine une différence de retard (Δt_{dx}) en tant que valeur de la différence entre la durée de retard d'activation (t_{d_ONx}) détectée au cous de la période d'horloge de la modulation d'impulsion en largeur et la durée de retard de désactivation (t_{d_OFFx}) détectée au cours de la période d'horloge de la modulation d'impulsion en largeur.

11. Dispositif (15) selon la revendication 10,
**caractérisé en ce que** l'unité d'évaluation (21) compare la différence de retard (Δt_{dx}) déterminée par l'unité comparatrice (19) à une valeur de seuil de différence prédéterminée (OL_threshold) et incrémente de 1 un compte de dépassements inférieurs (OL_COUNTERx) lorsque la différence de retard (Δt_{dx}) est inférieure, au cours d'une période d'horloge de la modulation d'impulsion en largeur instantanée, à la valeur de seuil de différence (OL_threshold) ou est égale à la valeur de seuil de différence (OL_threshold), et met à zéro le compte de dépassements inférieurs (OL_COUNTERx) lorsque la différence de retard (Δt_{dx}) est supérieure à la valeur de seuil de différence (OL_threshold) au cours d'une période d'horloge de la modulation d'impulsion en largeur instantanée.
